# FASCICULE DE BREVET EUROPEEN

(11) **EP 3 671 697 B1**
(45) Date de publication et mention de la délivrance du brevet: **10.01.2024**
(21) Numéro de dépôt: 19212498.0
(22) Date de dépôt: 29.11.2019
(51) Int. Cl.: G08G 5/00, G01S 13/91, G01S 15/08, G01C 23/00, G01S 13/935, G01S 15/93, G01S 15/86, G01S 17/933

(54) **PROCÉDÉ DE DÉTECTION DE LA PROXIMITÉ D'UN ARRANGEMENT LATÉRAL D'UN AÉRONEF AVEC LE SOL ET AÉRONEF**
VERFAHREN ZUR ERKENNUNG DER NÄHE EINER SEITLICHEN ANORDNUNG EINES FLUGZEUGS MIT BODEN UND FLUGZEUG
METHOD FOR DETECTING THE PROXIMITY OF A LATERAL ARRANGEMENT OF AN AIRCRAFT WITH THE GROUND AND AIRCRAFT

(30) Priorité: 19.12.2018 FR 1873390
(43) Date de publication de la demande: 24.06.2020
(73) Titulaire: Airbus Helicopters, 13725 Marignane Cedex (FR)
(72) Inventeur: ABDELLI, Kamel, 13011 MARSEILLE (FR)
(74) Mandataire: GPI & Associés

(56) Documents cités:
- US-A- 6 012 001
- US-A1- 2007 050 140
- US-A1- 2008 180 310
- US-A1- 2010 161 174
- US-A1- 2010 305 784
- US-A1- 2014 061 367
- US-A1- 2014 062 756
- US-A1- 2015 073 628
- US-A1- 2015 235 560
- US-A1- 2018 075 762

## Description

La présente invention concerne un procédé de détection de la proximité d'un arrangement latéral d'un aéronef avec le sol et un aéronef appliquant ce procédé.

Le projet menant à cette demande de brevet a reçu un financement du programme de recherche et d'innovation Horizon 2020 de l'Union européenne, dans le cadre de la convention de subvention CleanSky 2 N° « GAM-FRC-2014-001 Issue E .

Un aéronef peut comprendre un fuselage qui s'étend longitudinalement d'un nez vers une extrémité arrière. De plus, l'aéronef peut comprendre un premier arrangement latéral et un deuxième arrangement latéral qui sont disposés latéralement de part et d'autre du fuselage pour participer chacun au déplacement de l'aéronef. Chaque arrangement latéral peut par exemple comprendre une voilure fixe participant ainsi à la sustentation de l'aéronef et/ou une hélice tractive ou propulsive.

Par exemple, un hélicoptère hybride peut comprendre un fuselage portant un rotor qui participe à sa sustentation voire à sa propulsion. De plus, l'hélicoptère hybride comporte au moins un propulseur porté par au moins une aile. Un tel propulseur est muni d'une hélice latérale tractive ou propulsive. Par exemple, un hélicoptère hybride comporte deux hélices latérales disposées latéralement de part et d'autre du fuselage, chaque hélice latérale étant portée par au moins une aile.

Une telle hélice latérale présente des pales mises en rotation par un arbre d'hélice éventuellement porté par une nacelle du propulseur. Ces pales sont dénommées par commodité « pales latérales » pour être distinguées des pales du rotor le cas échéant. Par exemple, deux nacelles portant des pales latérales sont positionnées transversalement de part et d'autre du fuselage à l'extrémité d'une aile et sont positionnées longitudinalement entre la cabine de pilotage de l'aéronef et l'extrémité arrière.

En raison de leurs agencements, les pales latérales voire les ailes sont susceptibles d'entrer en contact avec le sol ou avec des éléments présents sous l'aéronef lors d'un atterrissage ou d'un décollage

Or, un pilote présent dans l'aéronef peut éprouver des difficultés pour voir les hélices voire les ailes et évaluer la proximité des pales latérales ou des ailes avec de tels éléments ou le sol. Les pales latérales d'une hélice et/ou les extrémités des ailes peuvent même être en dehors du champ de vision d'un pilote.

Cette difficulté à évaluer la position des pales latérales et/ou des ailes par rapport à d'éventuels obstacles peut s'avérer stressante lors des phases de décollage et d'atterrissage qui induisent une charge de travail importante pour le pilote.

Le document WO 2015/134078 décrit un système pour guider un avion afin d'éviter une collision avec les extrémités de l'aile de l'avion. Ce système comprend au moins une caméra générant un flux d'images de l'environnement extérieur et d'une extrémité d'une aile ainsi qu'un écran et un calculateur. Le calculateur est programmé pour afficher les images sur l'écran et afficher en surimpression sur ces images une représentation de la position future de ladite extrémité de l'aile.

Le document US2018/075762 décrit un système de détection d'obstacles.

Le document US2014/062756 décrit un système de détection d'obstacles reposant sur un sol.

Les documents US2007/050140, US 6012001, US2015/073628, US2010/305784, US2010/161174, US2014/061367, US2008/180310, US2015/235560 sont aussi connus.

La présente invention a alors pour objet de proposer un procédé permettant de faciliter le travail d'un pilote d'un aéronef et notamment d'un hélicoptère hybride muni d'au moins une hélice latérale, en particulier lors de phases d'atterrissage et de décollage.

Ainsi, l'invention concerne un procédé d'assistance au pilotage d'un aéronef ayant un fuselage qui s'étend longitudinalement d'un nez vers une extrémité arrière, cet aéronef ayant un premier arrangement latéral et un deuxième arrangement latéral disposés latéralement de part et d'autre du fuselage et participant chacun au déplacement de l'aéronef.

Durant une phase d'assistance, le procédé comporte les étapes suivantes :
- mesure d'une valeur d'une première garde au sol du premier arrangement latéral et d'une valeur d'une deuxième garde au sol du deuxième arrangement latéral,
- affichage sur un écran d'au moins un symbole qui varie en fonction de la variation de ladite valeur de la première garde au sol et/ou de ladite valeur de la deuxième garde au sol.

L'expression « participant chacun au déplacement de l'aéronef » signifie dans le cadre d'un aéronef qu'un arrangement latéral permet d'assurer au moins partiellement la sustentation de l'aéronef et/ou l'avancement de l'aéronef selon au moins un sens. Ainsi, un arrangement latéral peut comporter au moins une voilure fixe et/ou un rotor et éventuellement une hélice par exemple.

L'expression « au moins un symbole qui varie en fonction de la variation de ladite valeur de la première garde au sol et/ou de ladite valeur de la deuxième garde au sol » signifie notamment que chaque symbole généré varie lorsqu'au moins la valeur de la première garde au sol varie ou lorsqu'au moins la valeur de la deuxième garde au sol varie. Par exemple, un symbole peut varier uniquement lorsque la première garde au sol varie, un autre symbole peut varier uniquement lorsque la deuxième garde au sol varie et un autre symbole peut varier lorsque la première garde au sol varie ou la deuxième garde au sol varie.

Indépendamment de cet aspect, un symbole varie en présentant une forme et/ou un aspect et/ou une position sur l'écran qui changent sur ordre d'un calculateur. Par exemple, un symbole peut varier en présentant une dimension et/ou une couleur qui varient et un autre symbole peut varier en présentant une position et/ou une couleur qui varient.

Le procédé est appliqué au moins durant une phase d'assistance. Une telle phase d'assistance peut être déclenchée sur requête par un pilote en manoeuvrant une commande tactile, vocale ou visuelle par exemple ou peut être mise en oeuvre automatiquement par un calculateur. Selon un exemple, un calculateur peut appliquer ce procédé au moins durant une phase d'atterrissage ou de décollage. Une telle phase d'atterrissage ou de décollage peut être détectée en surveillant une vitesse d'avancement et/ou une hauteur de l'aéronef et/ou en surveillant la position d'un train d'atterrissage rétractable par exemple.

Dès lors, ce procédé prévoit de mesurer une garde au sol de chaque arrangement latéral durant la phase d'assistance. Par exemple, la hauteur d'une nacelle d'un propulseur d'un arrangement latéral est mesurée à l'aide d'un senseur ou d'un jeu de senseurs.

Un calculateur traite les valeurs des gardes au sol et encode à l'issue du traitement un ordre donné par le biais d'un signal de commande. Cet ordre est transmis à l'écran qui génère et affiche sur une page au moins un symbole, chaque symbole illustrant visuellement au moins une des première et deuxième gardes au sol.

Par suite, un pilote peut surveiller l'écran pour évaluer la position des arrangements latéraux et le cas échéant d'hélices par rapport à des obstacles situés sous l'aéronef, et notamment par rapport au sol, sans avoir besoin de se contorsionner pour regarder directement les arrangements latéraux. En observant chaque symbole sur l'écran, le pilote peut décider d'effectuer si besoin une action de pilotage corrective, par exemple en modifiant l'angle de roulis de l'aéronef.

Ce procédé s'avère relativement simple en ne nécessitant pas des caméras filmant l'environnement de l'aéronef contrairement au document WO 2015/134078.

Ce procédé peut de plus présenter une ou plusieurs des caractéristiques additionnelles qui suivent.

Selon un aspect, pour mesurer la valeur de la première garde au sol et la valeur de la deuxième garde au sol, le procédé peut comporter les étapes suivantes :
- acquisition d'au moins un premier signal de mesure avec un premier senseur porteur d'une première information image de la valeur de la première garde au sol, et acquisition d'au moins un deuxième signal de mesure avec un deuxième senseur porteur d'une deuxième information image de la valeur de la deuxième garde au sol,
- détermination de la valeur de la première garde au sol en traitant ledit au moins un premier signal de mesure et de la valeur de la deuxième garde au sol en traitant ledit au moins un deuxième signal de mesure.

Selon un aspect, pour mesurer la valeur de la première garde au sol et la valeur de la deuxième garde au sol, le procédé peut comporter les étapes suivantes :
- acquisition d'une pluralité de premiers signaux de mesure avec une pluralité de premiers senseurs de la première garde au sol, acquisition d'une pluralité de deuxièmes signaux de mesure avec une pluralité de deuxièmes senseurs de la deuxième garde au sol
- conditionnement desdits premiers signaux de mesure et desdits deuxièmes signaux de mesure,
- consolidation desdits premiers signaux de mesure et desdits deuxièmes signaux de mesure suite au dit conditionnement via une méthode de vote pour l'obtention respectivement de la valeur de la première garde au sol et de la valeur de la deuxième garde au sol.

Ainsi, l'aéronef peut comprendre au moins un jeu de senseurs par arrangement latéral.

Chaque senseur d'un jeu de senseurs d'un arrangement latéral génère un signal électrique variant en fonction de la hauteur de ce senseur. Durant une étape de traitement, un conditionneur peut alors conditionner ce signal pour obtenir une grandeur électrique exploitable, le conditionnement pouvant contenir des méthodes usuelles telles qu'une conversion courant électrique /tension électrique, une amplification, un filtrage... . Un conditionneur peut être intégré au senseur ou à un calculateur.

De plus, le signal conditionné peut être numérisé par un convertisseur du senseur ou du calculateur.

Selon un exemple, chaque senseur génère un signal de mesure électrique brut, conditionne ce signal de mesure électrique brut pour obtenir un signal de mesure conditionné sous forme électrique puis numérise le signal de mesure conditionné sous forme électrique pour obtenir un signal de mesure conditionné sous forme numérique. Le signal de mesure conditionné sous forme numérique est transmis au calculateur via un réseau tel que par exemple un bus CAN (Controller Area Network en langue anglaise).

Au moins une des étapes de traitement précédentes peut être réalisée par le calculateur.

De plus, le traitement peut comprendre en présence de plusieurs senseurs d'un même jeu de senseurs une étape de consolidation usuelle à des fins de sécurité via un principe de vote par exemple afin de déterminer la présence d'un senseur défaillant.

A titre illustratif, le calculateur reçoit trois premiers signaux sous forme numérique. Ce calculateur convertit de manière classique alors ces trois premiers signaux sous forme numérique en trois hauteurs exprimées en mètres ou en pieds par exemple puis retient une hauteur pour la première garde au sol via une méthode de vote classique. De même, le calculateur reçoit trois deuxièmes signaux sous forme numérique. Ce calculateur convertit alors ces trois deuxièmes signaux sous forme numérique en trois hauteurs exprimées en mètres ou en pieds par exemple puis retient une hauteur pour la deuxième garde au sol via une méthode de vote classique.

Le calculateur commande alors l'écran pour générer et afficher chaque symbole requis sur cet écran en fonction de la hauteur de la première garde au sol et de la hauteur de la deuxième garde au sol.

Selon un aspect, l'aéronef peut comprendre plusieurs premiers senseurs émettant chacun un premier signal de mesure et comprenant au moins deux premiers senseurs dissimilaires et/ou disposés en des zones différentes du premier arrangement latéral, une pluralité de deuxièmes senseurs émettant chacun un deuxième signal de mesure contenant au moins deux deuxièmes senseurs dissimilaires et/ou disposés en des zones différentes du deuxième arrangement latéral.

Le terme « dissimilaire » signifie que deux senseurs mesurant une même donnée fonctionnent selon des techniques différentes. Par exemple, un senseur d'un jeu de senseur est un senseur connu sous l'acronyme « LIDAR » correspondant à l'expression anglaise « light détection and ranging » ou « laser detection and ranging », un autre senseur de ce jeu de senseur est une radiosonde et un dernier senseur de ce jeu de senseurs est un capteur à ultrasons.

De manière complémentaire ou alternative, les senseurs d'un même arrangement latéral peuvent être placés dans des zones différentes. Par exemple, un ou plusieurs senseurs d'un arrangement latéral peuvent être placés sous une nacelle d'un propulseur, un ou plusieurs senseurs de cet arrangement latéral peuvent être placés sur un côté de la nacelle d'un propulseur et/ou un ou plusieurs senseurs de cet arrangement latéral peuvent être placés sous une aile.

Ainsi, les senseurs d'un arrangement latéral peuvent être choisis afin d'être dissimilaires et agencés différemment pour optimiser la fiabilité de la hauteur déterminée conditionnant au moins un symbole affiché sur l'écran.

Selon un aspect, chaque symbole peut être en permanence affiché, du moins lorsqu'une page contenant ce symbole est active sur l'écran.

Alternativement, l'affichage dudit au moins un symbole peut être conditionné à la détection d'au moins un des deux évènements suivants voire à la détection simultanée des deux évènements suivants :
- détection qu'un train d'atterrissage rétractable de l'aéronef est déployé,
- détection que la valeur de la première garde au sol est inférieure à une hauteur seuil ou que la deuxième garde est inférieure à la hauteur seuil.

Selon cette variante, l'écran affiche le ou les symboles relatifs à la première garde au sol et à la deuxième garde au sol uniquement en cas de risque d'accident, à savoir à proximité du sol.

Selon un aspect, le procédé peut comporter une étape de détermination d'une consigne de roulis à respecter par exemple pour que la valeur de la première garde au sol et la valeur de la deuxième garde au sol soient maîtrisées pendant la procédure d'atterrissage en pente. Par exemple, lors d'une manoeuvre en vue d'un atterrissage sur terrain en pente, le pilote aura une parfaite connaissance des gardes au sol en particulier après le contact avec le sol, aéronef à l'horizontal, du partie d'un train d'atterrissage à roue ou à patins sur la partie amont de la pente, pour ensuite piloter le pas cyclique en roulis d'un rotor en connaissance de cause de la garde au sol avec une partie aval de la pente avant un second contact d'un train d'atterrissage avec cette partie aval du sol. Par exemple selon une méthode usuelle, ledit au moins un symbole comprend un symbole central mobile le long d'un segment de référence par exemple en arc de cercle, le positionnement dudit symbole central sur le segment de référence étant fonction de la consigne de roulis.

Dès lors, la valeur de la première garde au sol et la valeur de la deuxième garde au sol permettent de définir une consigne de roulis à appliquer pour que l'aéronef soit sensiblement parallèle au sol, cette consigne de roulis étant facilement identifiable par un pilote en observant la position du symbole central sur le segment de référence.

Par exemple, le symbole central est placé au centre du segment de référence lorsque la première garde au sol et la valeur de la deuxième garde au sol sont identiques. A l'inverse, le symbole central s'écarte du centre du segment de référence, l'écart entre le symbole central et le centre du segment de référence croissant proportionnellement à la différence entre la valeur de la première garde au sol et la valeur de la deuxième garde au sol. Par exemple, le symbole central s'écarte du centre du segment de référence selon un sens correspondant au sens selon lequel le pilote doit déplacer une commande pour appliquer la consigne de roulis.

Selon un aspect, le symbole central peut comporter une première portion et une deuxième portion représentant respectivement la première garde au sol et la deuxième garde au sol, un fond de la première portion et un fond de la deuxième portion variant en fonction respectivement de la valeur de la première garde au sol et de la valeur de la deuxième garde au sol.

La couleur et/ou l'aspect de chaque portion peuvent varier en fonction de la valeur de la garde au sol correspondante. Par exemple chaque portion peut avoir un fond ayant une couleur variant du vert vers le rouge en passant par une couleur ambre lorsque la garde au sol correspondante diminue.

Selon un aspect, ledit au moins un symbole peut comporter un premier symbole et un deuxième symbole, le premier symbole s'étendant selon un sens à partir d'un segment d'horizon représentant l'horizon d'un horizon artificiel jusqu'à une première extrémité sur une première longueur fonction de la valeur de la première garde au sol, le deuxième symbole s'étendant selon ledit sens à partir du segment d'horizon jusqu'à une deuxième extrémité sur une deuxième longueur fonction de la valeur de la deuxième garde au sol.

La longueur d'un symbole entre le segment d'horizon et son extrémité peut être proportionnelle à la valeur de la garde au sol correspondante.

Ainsi, un pilote peut évaluer facilement la position de l'aéronef au regard du sol en visualisant la longueur du premier symbole et la longueur du deuxième symbole.

Eventuellement, le premier symbole présente un fond variant au moins en fonction de la valeur de la première garde au sol et le deuxième symbole présente un fond variant en fonction de la valeur de la deuxième garde au sol.

La couleur et/ou l'aspect du fond de chaque symbole peut varier au moins en fonction de la valeur de la garde au sol correspondante. Par exemple chaque fond peut avoir une couleur variant du vert vers le rouge en passant par une couleur ambre lorsque la garde au sol correspondante diminue.

Selon un aspect, l'aéronef comprenant au moins un train d'atterrissage pouvant être compressé afin d'être dans un état compressé ou un état non compressé, ledit procédé peut comporter les étapes suivantes :
- détermination que ledit au moins un train d'atterrissage est dans ledit état compressé ou dans ledit état non compressé,
- attribution au dit au moins un symbole d'un aspect variant lorsque ledit au moins un train d'atterrissage passe dudit état compressé au dit état non compressé et inversement

Ce procédé peut comporter une étape de détection d'un état compressé atteint au sol ou non compressé atteint en vol d'un train d'atterrissage. Un fond d'au moins un symbole peut être commandé pour varier en fonction dudit état compressé ou non compressé d'un train d'atterrissage. En effet, le jeu de couleur ou la surcharge graphique d'un symbole peut varier à cet effet pour donner une indication supplémentaire visuelle signalant qu'un train d'atterrissage est compressé et est donc en contact avec le sol. Par exemple, le fond d'un premier symbole peut varier lorsqu'un premier train d'atterrissage présent d'un premier côté de l'aéronef passe d'un état compressé à non compressé et inversement. De même, le fond d'un deuxième symbole peut varier lorsqu'un deuxième train d'atterrissage présent d'un deuxième côté de l'aéronef passe d'un état compressé à non compressé et inversement. Le jeu de couleur ou la surcharge graphique d'un symbole et par exemple du symbole central peut être adapté pour la prise en compte d'un troisième train d'atterrissage central.

Eventuellement, le procédé peut comporter une étape d'affichage d'un segment de sol reliant la première extrémité à la deuxième extrémité.

Un tel segment de sol illustre schématiquement où se situe le sol par rapport à l'aéronef.

Outre un procédé, l'invention vise un aéronef ayant un fuselage qui s'étend longitudinalement d'un nez vers une extrémité arrière, ledit aéronef ayant un premier arrangement latéral et un deuxième arrangement latéral disposés latéralement de part et d'autre du fuselage et participant chacun au déplacement de l'aéronef,

L'aéronef comporte au moins un premier senseur émettant un premier signal relatif à la valeur d'une première garde au sol du premier arrangement latéral, ledit aéronef comportant au moins un deuxième senseur émettant un deuxième signal relatif à la valeur d'une deuxième garde au sol du deuxième arrangement latéral, ledit aéronef comportant un écran et un calculateur, ledit calculateur étant relié à chaque premier senseur ainsi qu'à chaque deuxième senseur et à l'écran et étant configuré pour appliquer le procédé de l'invention en déterminant ladite valeur de la première garde au sol et de la deuxième garde au sol, ledit calculateur transmettant un signal de commande à l'écran pour afficher ledit au moins un symbole.

Le calculateur peut comprendre une unique unité ou plusieurs unités. Par exemple, le calculateur comporte une unité centrale de gestion communiquant avec les senseurs et une unité formant une partie d'un écran multifonction. Au moins une unité peut être redondée pour sécuriser l'information.

Par exemple, une unité peut traiter les données des senseurs et communique avec une unité dédiée à l'affichage. Selon un autre exemple, une unité dédiée à l'affichage effectue aussi le traitement des données des senseurs.

Cet aéronef peut comporter au moins deux dits premiers senseurs dissimilaires et/ou disposés en des zones différentes du premier arrangement latéral, ledit aéronef comportant au moins deux dits deuxièmes senseurs dissimilaires et/ou disposés en des zones différentes du deuxième arrangement latéral.

Au moins un premier senseur ou au moins un deuxième senseur peut comporter un LIDAR ou un radioaltimètre voire un capteur à ultrasons.

Selon un aspect, l'aéronef peut comporter un train d'atterrissage rétractable.

Selon un aspect, le premier arrangement latéral peut comprendre une première voilure fixe portant une première hélice et le deuxième arrangement latéral comprenant une deuxième voilure fixe portant une deuxième hélice.

L'invention et ses avantages apparaîtront avec plus de détails dans le cadre de la description qui suit avec des exemples donnés à titre illustratif en référence aux figures annexées qui représentent :
[Fig 1] la figure 1, une vue de dessous d'un aéronef selon l'invention,
[Fig 2] la figure 2, une vue de dessous d'un aéronef selon l'invention,
[Fig 3] la figure 3, une vue de dessous d'un aéronef selon l'invention,
[Fig 4] la figure 4, un schéma illustrant un système d'assistance appliquant le procédé selon l'invention,
[Fig 5] la figure 5, un schéma explicitant le procédé selon l'invention,
[Fig 6] la figure 6, un schéma explicitant le procédé selon l'invention,
[Fig 7] la figure 7, un schéma explicitant le procédé selon l'invention,
[Fig 8] la figure 8, un schéma explicitant le procédé selon l'invention.

Les éléments présents dans plusieurs figures distinctes sont affectés d'une seule et même référence.

Trois directions X, Y et Z orthogonales les unes par rapport aux autres sont représentées sur certaines figures.

La première direction X est dite longitudinale. Le terme « longitudinal » est relatif à toute direction parallèle à la première direction X.

La deuxième direction Y est dite transversale. Le terme « transversal » est relatif à toute direction parallèle à la deuxième direction Y. Le terme « latéralement » fait aussi référence à la deuxième direction Y.

Enfin, la troisième direction Z est dite en élévation. L'expression « en élévation » est relative à toute direction parallèle à la troisième direction Z.

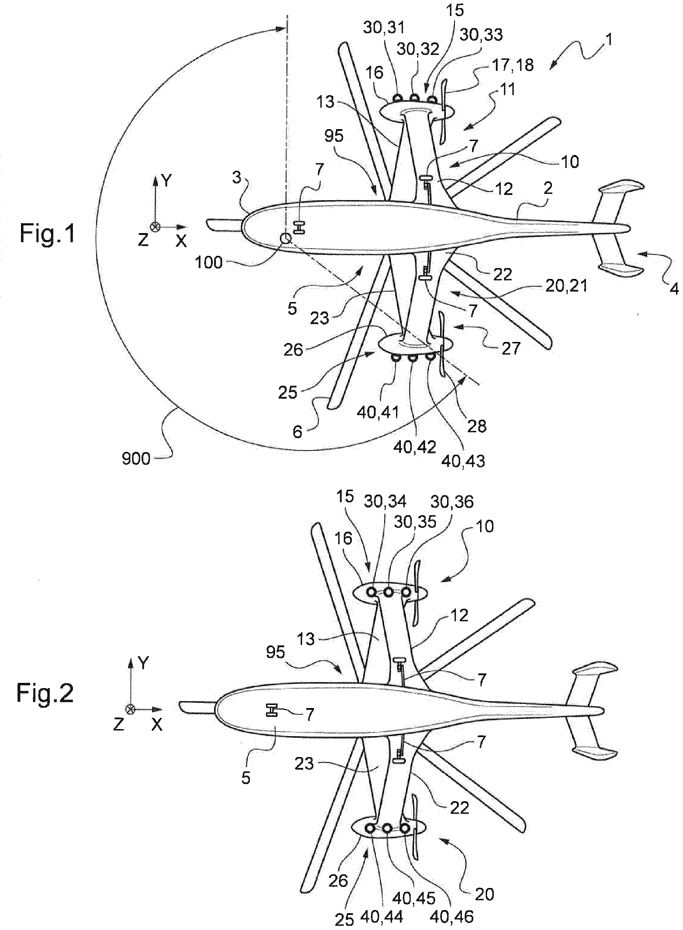

La figure 1 présente un aéronef 1 selon l'invention.

Cet aéronef 1 est muni d'un fuselage 2 qui s'étend longitudinalement selon l'axe longitudinal X d'un nez 3 vers une extrémité arrière 4, latéralement selon l'axe transversal Y d'un premier flanc vers un deuxième flanc et en élévation selon l'axe en élévation d'un dessous vers un sommet.

Cet aéronef peut comprendre un rotor 5 muni de pales 6, le rotor étant agencé au dessus du fuselage 2.

De plus, cet aéronef 1 comporte un premier arrangement latéral 10 et un deuxième arrangement latéral 20 disposés latéralement selon l'axe transversal Y de part et d'autre du fuselage 2 et participant chacun au déplacement de l'aéronef 1. Le premier arrangement latéral 10 s'étend latéralement à partir du premier flanc et le deuxième arrangement latéral 20 s'étend latéralement à partir du deuxième flanc du fuselage.

Chaque arrangement latéral peut comprendre une voilure fixe voire au moins un propulseur. L'aéronef 1 peut donc être un aéronef hybride.

Ainsi, le premier arrangement latéral 10 peut comprendre une première voilure fixe 11 portant un premier propulseur 15. Un tel premier propulseur 15 peut comprendre une première nacelle 16 portant une première hélice 17 munie de pales 18. Selon l'exemple de la figure 1, la première voilure fixe 11 possède une première aile inférieure 12 et une première aile supérieure 13, la première nacelle étant fixée aux extrémités de la première aile inférieure 12 et de la première aile supérieure 13. Toujours selon cet exemple, la première hélice est positionnée du côté des bords de fuite de la première aile inférieure 12 et de la première aile supérieure 13. La première hélice peut être tractive ou propulsive.

De même, le deuxième arrangement latéral 20 peut comprendre une deuxième voilure fixe 21 portant un deuxième propulseur 25. Un tel deuxième propulseur 25 peut comprendre une deuxième nacelle 26 portant une deuxième hélice 27 munie de pales 28. Selon l'exemple de la figure 1, la deuxième voilure fixe 21 possède une deuxième aile inférieure 22 et une deuxième aile supérieure 23, la deuxième nacelle étant fixée aux extrémités de la deuxième aile inférieure 22 et de la deuxième aile supérieure 23. Toujours selon cet exemple, la deuxième hélice est positionnée du côté des bords de fuite de la deuxième aile inférieure 22 et de la deuxième aile supérieure 23. La deuxième hélice peut être tractive ou propulsive.

D'autres agencements sont possibles sans sortir du cadre de l'invention. Par exemple, chaque arrangement latéral peut comprendre une unique aile.

Par ailleurs, une installation motrice 95 peut mettre en mouvement les divers organes tournants de l'aéronef, et notamment le rotor 5 de la voilure tournante, la première hélice 17 et la deuxième hélice 27.

Selon un autre aspect l'aéronef 1 comporte un atterrisseur. Cet atterrisseur peut comprendre au moins un train d'atterrissage 7 pouvant être compressé suite à un contact avec le sol et/ou rétractable, à savoir un train d'atterrissage pouvant être escamoté en vol au moins partiellement dans une case de train et déployé en dehors de la case de train avant d'atterrir. Des capteurs usuels peuvent permettre de déterminer qu'un train d'atterrissage est déployé. Des capteurs usuels peuvent permettre de déterminer qu'un train d'atterrissage est compressé et/ou non compressé, tels que par exemple des capteurs de pression, des capteurs à effet hall...

Selon l'exemple représenté, le fuselage porte un train d'atterrissage central, la première aile inférieure porte un premier train d'atterrissage et la deuxième aile inférieure porte un deuxième train d'atterrissage.

Par ailleurs, le fuselage peut comprendre une cabine de pilotage accueillant un pilote 100. En raison de la position du pilote, au moins le premier arrangement latéral n'est pas totalement dans le champ de vision 900 du pilote.

Dès lors, l'aéronef 1 comporte un système d'assistance au pilotage innovant permettant à un pilote d'évaluer la garde au sol minimale de chaque arrangement latéral notamment lors d'un atterrissage ou d'un décollage réalisé avec une pente importante.

Un tel système d'assistance au pilotage comporte au moins un premier senseur 30 émettant un premier signal relatif à la valeur d'une première garde au sol du premier arrangement latéral 10.

Un tel premier senseur peut prendre la forme d'un LIDAR, d'une radiosonde ou encore d'un capteur à ultrasons par exemple.

De même, l'aéronef comporte au moins un deuxième senseur 40 émettant un deuxième signal relatif à la valeur d'une deuxième garde au sol du deuxième arrangement latéral. Un tel deuxième senseur peut prendre la forme d'un LIDAR, d'une radiosonde ou encore d'un capteur à ultrasons par exemple.

Chaque arrangement latéral peut comprendre au moins deux senseurs dissimilaires et/ou disposés dans des zones différentes.

Ainsi le premier arrangement latéral 10 peut comprendre plusieurs premiers senseurs, au moins deux premiers senseurs étant dissimilaires et/ou positionnés différemment. De manière complémentaire ou alternative, le deuxième arrangement latéral 20 peut comprendre plusieurs deuxièmes senseurs, au moins deux deuxièmes senseurs étant dissimilaires et/ou positionnés différemment.

Selon l'exemple de la figure 1, le premier arrangement latéral 10 comporte un jeu de trois premiers senseurs 31, 32, 33 disposés latéralement sur la première nacelle, et selon cet agencement sur une face de la première nacelle opposée au premier flanc du fuselage. Au moins deux premiers senseurs 31, 32, 33 peuvent être dissimilaires en comprenant par exemple respectivement une radiosonde et un lidar. De plus, le deuxième arrangement latéral 20 comporte un jeu de trois deuxièmes senseurs 41, 42, 43 disposés latéralement sur la deuxième nacelle, et par exemple sur une face de la deuxième nacelle opposée au deuxième flanc du fuselage. Au moins deux deuxièmes senseurs 41, 42, 43 peuvent être dissimilaires en comprenant par exemple respectivement une radiosonde et un lidar.

Selon l'exemple de la figure 2, le premier arrangement latéral 10 comporte un jeu de trois premiers senseurs 34, 35, 36 disposés en élévation sous la première nacelle, et par exemple sur une face de la première nacelle en regard du sol lors d'un atterrissage ou d'un décollage. Au moins deux premiers senseurs 34, 35, 36 peuvent être dissimilaire en comprenant par exemple respectivement une radiosonde et un lidar. De plus, le deuxième arrangement latéral 20 comporte un jeu de trois deuxièmes senseurs 44, 45, 46 disposés en élévation sous la deuxième nacelle, et par exemple sur une face de la deuxième nacelle en regard du sol lors d'un atterrissage ou d'un décollage. Au moins deux deuxièmes senseurs 44, 45, 46 peuvent être dissimilaires en comprenant par exemple respectivement une radiosonde et un lidar.

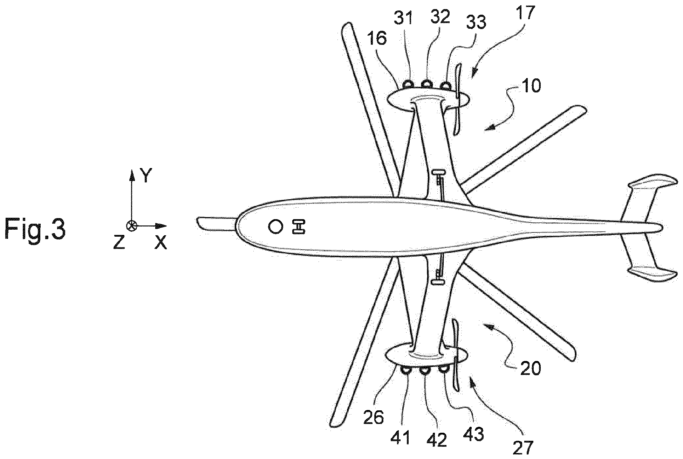

Selon l'exemple de la figure 3, le premier arrangement latéral 10 comporte un jeu de trois premiers senseurs 31, 32, 33 disposés latéralement sur la première nacelle selon la figure 1 et un jeu de trois premiers senseurs 34, 35, 36 disposés en élévation sous la première nacelle selon la figure 2. Le deuxième arrangement latéral 20 comporte un jeu de trois deuxièmes senseurs 41, 42, 43 disposés latéralement sur la deuxième nacelle selon la figure 1 et un jeu de trois deuxièmes senseurs 44, 45, 46 disposés en élévation sous la deuxième nacelle selon la figure 2

D'autres agencements sont possibles. Par exemple, un ou plusieurs senseurs peuvent être disposés sur une voilure fixe et par exemple sur une face d'une voilure fixe en regard du sol lors d'un atterrissage ou d'un décollage.

En présence d'hélices, les senseurs peuvent être situés à proximité de l'hélice pour être représentatifs d'une garde au sol minimale de l'hélice à un coefficient de correction près. Ce coefficient de correction peut correspondre à la hauteur séparant le senseur du point bas de l'hélice.

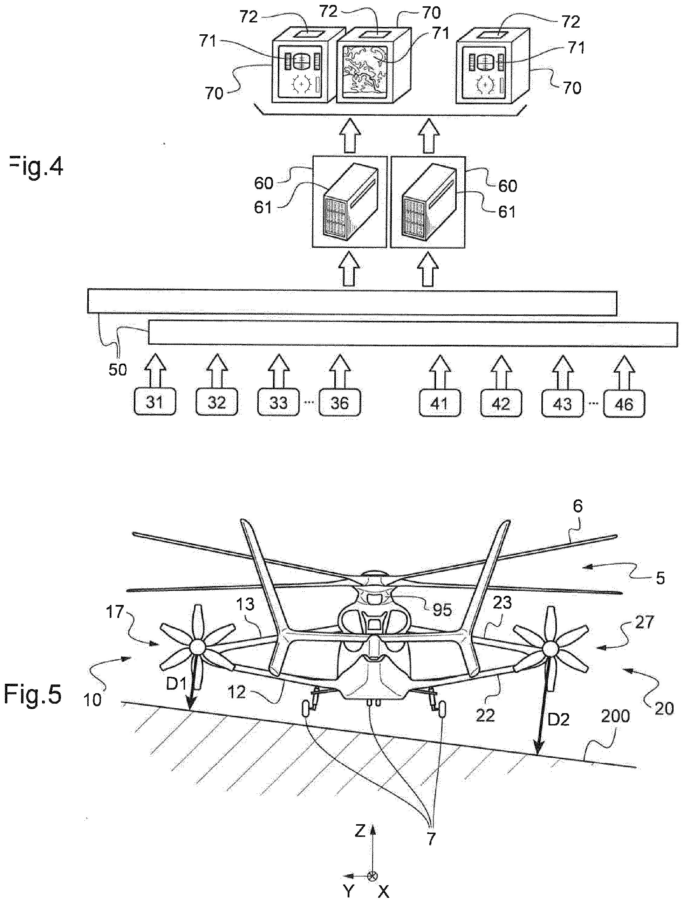

Selon un autre aspect et en référence à la figure 4, le système d'assistance comporte au moins un calculateur 60 en communication filaire ou non filaire avec au moins un écran 71 ainsi qu'avec chaque premier senseur et chaque deuxième senseur.

Par exemple, chaque premier senseur et chaque deuxième senseur sont reliés à au moins un système de communication 50, chaque calculateur 60 étant relié à ce système de communication 50. Un système de communication 50 peut prendre la forme d'un réseau numérique et par exemple d'un bus CAN, d'un réseau Ethernet...

Selon l'exemple de la figure 4, le système d'assistance peut comprendre au moins deux calculateurs 60 et au moins deux systèmes de communication 50 par sécurité.

Chaque calculateur 60 peut comprendre une ou plusieurs unités de calcul 61, 72. Chaque unité de calcul peut comprendre par exemple au moins un processeur et au moins une mémoire, au moins un circuit intégré, au moins un système programmable, au moins un circuit logique, ces exemples ne limitant pas la portée donnée à l'expression « unité de calcul ».

Selon l'exemple illustré, un calculateur 60 comporte une unité de calcul centrale 61 et une unité de calcul déportée 72 par écran 71. Une unité de calcul déportée et l'écran associé forment par exemple un écran multifonction 70 connu sous l'acronyme « MFD » correspondant à l'expression anglaise « multi fonction display ».

Ce système d'assistance et notamment le calculateur est configuré pour appliquer le procédé selon l'invention.

Par ailleurs, le système d'assistance peut comprendre un organe commandable par un pilote pour initier une phase d'assistance et/ou un capteur apte à signaler qu'un train d'atterrissage est déployé tel qu'un capteur de position et/ou un capteur mesurant une hauteur ou une altitude globale de l'aéronef tel qu'un système GPS ou un système anémobarométrique par exemple. De plus, le calculateur peut être relié à au moins un capteur transmettant un signal indiquant si un train d'atterrissage est compressé ou non compressé.

En référence à la figure 5, à chaque instant une première garde au sol D1 sépare verticalement un premier senseur du sol 200 et une deuxième garde au sol D2 sépare verticalement un deuxième senseur de ce sol 200. La première distance D1 et la deuxième distance D2 sont selon l'exemple différentes en raison d'une inclinaison du sol par rapport à un plan horizontal.

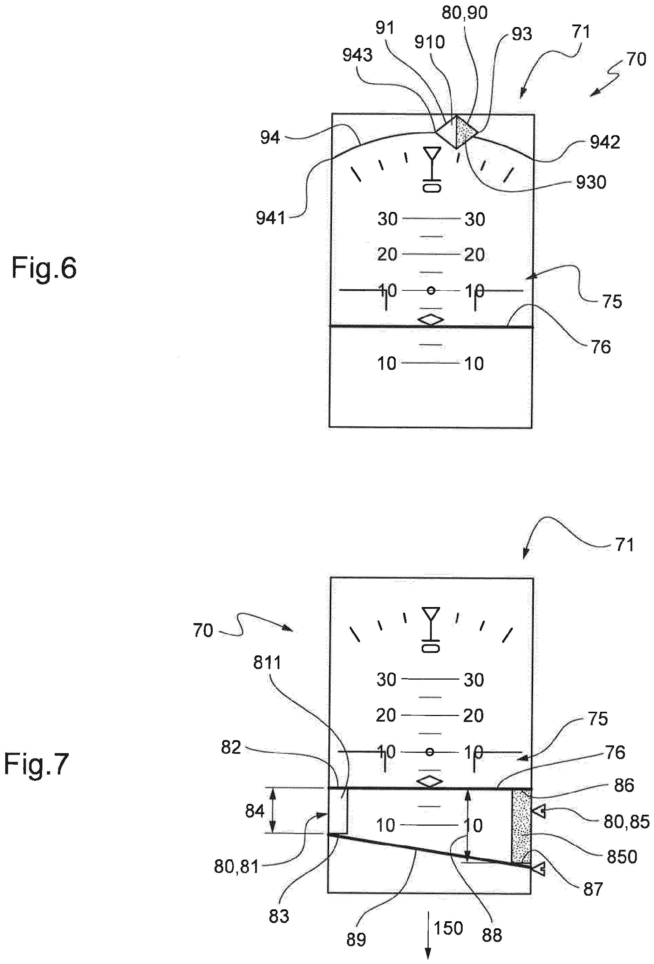

En référence à la figure 6, le procédé comporte des étapes visant à afficher des informations relatives à la première distance D1 et à la deuxième distance D2 au moins durant une phase d'assistance. Cette phase d'assistance peut être une phase déclenchée lorsque des conditions sont remplies, par exemple lors d'une phase d'atterrissage et/ou une phase de décollage voire notamment lorsqu'un train d'atterrissage est déployé et en dessous d'une certaine hauteur ou lorsqu'une commande est activée. Le procédé peut aussi être en permanence actif.

Selon ce procédé, la valeur de la première garde au sol D1 du premier arrangement latéral 10 et la valeur de la deuxième garde au sol D2 du deuxième arrangement latéral 20 sont mesurées.

Dès lors, chaque premier senseur 31, 32, 33, 34, 35, 36 acquiert un premier signal de mesure porteur d'une première information image de la valeur de la première garde au sol. De même, chaque deuxième senseur 41, 42, 43, 44, 45, 46 acquiert un deuxième signal de mesure porteur d'une deuxième information image de la valeur de la deuxième garde au sol.

A partir des premiers signaux de mesure et deuxièmes signaux de mesure, chaque calculateur est configuré pour déterminer la valeur de la première garde au sol et la valeur de la deuxième garde au sol.

Eventuellement, les premiers signaux et les deuxièmes signaux sont dans un premier temps soit traités par les senseurs eux-mêmes ou sont transmis à chaque calculateur pour traitement.

Quel que soit l'organe qui effectue le traitement, les premiers signaux de mesure et les deuxièmes signaux de mesure sont durant un tel traitement conditionnés par des méthodes usuelles de traitement du signal.

Eventuellement, après conditionnement, les premiers signaux de mesure et les deuxièmes signaux de mesure sont numérisés.

En présence d'un seul premier senseur, le calculateur peut déterminer directement la valeur de la première garde au sol à partir du signal reçu. Par exemple, le calculateur comporte un tableau donnant la valeur de la garde au sol en mètres en fonction du code binaire reçu. De même, en présence d'un seul deuxième senseur, le calculateur peut déterminer directement la valeur de la deuxième garde au sol à partir du signal reçu.

A l'inverse, en présence de plusieurs premiers senseurs et de plusieurs deuxièmes senseurs, le calculateur peut consolider les données reçues via une méthode de vote pour obtention respectivement de la valeur de la première garde au sol et de la valeur de la deuxième garde au sol à retenir.

Par exemple, le calculateur convertit chaque donnée reçue en une valeur exprimée en mètres et en déduit via une méthode de vote la valeur de la première garde au sol et la valeur de la deuxième garde au sol à retenir.

Indépendamment de la manière d'obtenir la valeur de la première garde au sol D1 et de la valeur de la deuxième garde au sol D2, le procédé comporte une étape de génération et d'affichage sur un écran 71 d'au moins un symbole 80 d'assistance. Chaque symbole 80 varie sur ordre du calculateur en fonction notamment de la variation de ladite valeur de la première garde au sol et/ou de ladite valeur de la deuxième garde au sol voire en fonction de l'état compressé ou non compressé d'un train d'atterrissage.

Par exemple l'unité de calcul centrale communique à une unité de calcul déportée la valeur de la première garde au sol D1 et la valeur de la deuxième garde au sol D2. L'unité de calcul déporté encode la valeur de la première garde au sol D1 et la valeur de la deuxième garde au sol D2 pour afficher chaque symbole requis sur l'écran 71, éventuellement en prenant en considération l'état compressé ou non compressé d'un train d'atterrissage.

Eventuellement, l'affichage de chaque symbole 80 d'assistance est conditionné à la détection qu'un train d'atterrissage 6 rétractable de l'aéronef 1 est déployé en scrutant un signal par un capteur de déploiement du train d'atterrissage et/ou à la détection que la valeur de la première garde au sol est inférieure à une hauteur seuil ou que la deuxième garde est inférieure à la hauteur seuil.

Selon l'exemple de la figure 6, le calculateur peut déterminer une consigne de roulis à respecter, par exemple pour que la valeur de la première garde au sol et la valeur de la deuxième garde au sol soient identiques, par exemple en appliquant une loi mémorisée.

Dès lors un symbole d'assistance peut comprendre un symbole central 90 mobile le long d'un segment de référence 94. La position de ce symbole central 90 sur ce segment de référence reflète la consigne de roulis et varie donc bien en fonction de la valeur de la première garde au sol D1 et de la valeur de la deuxième garde au sol D2.

Par exemple, le segment de référence prend la forme d'un arc de cercle.

Le segment de référence s'étend d'une extrémité distale 941 jusqu'à une extrémité proximale 942 en passant par un point 943. L'extrémité distale 941 est atteinte par le symbole central 90 pour illustrer une consigne de roulis maximale selon un premier sens de roulis. Une extrémité proximale 942 est atteinte par le symbole central 90 pour illustrer une consigne de roulis maximale et le point 943 est atteint par le symbole central 90 pour illustrer une consigne de roulis nulle.

Le symbole central 90 peut comporter une première portion 91 et une deuxième portion 93 représentant respectivement la première garde au sol et la deuxième garde au sol. Selon l'exemple illustré, le symbole central 90 a la forme d'un losange, la première portion 91 et la deuxième portion 93 ayant la forme de deux triangles ayant une base commune.

Le fond 910 de la première portion 91 et le fond 930 de la deuxième portion 93 peuvent varier en fonction respectivement de la valeur de la première garde au sol et de la de la valeur de la deuxième garde au sol.

Selon un exemple reprenant la charte de couleur des alarmes d'un aéronef, la couleur de chaque fond est déterminée en fonction d'un seuil de hauteur haut et d'un seuil de hauteur bas qui est inférieur au seuil de hauteur haut. Ainsi, chaque fond peut avoir une couleur verte lorsque la garde au sol associée est au seuil de hauteur haut, une couleur ambre lorsque la garde au sol associée est inférieure au seuil de hauteur haut et supérieure au seuil de hauteur bas et une couleur rouge lorsque la garde au sol associée est inférieure au seuil de hauteur bas. La couleur d'un fond peut aussi varier progressivement du vert au rouge.

Selon l'exemple de la figure 7, un symbole d'assistance peut comprendre un premier symbole 81 porteur de la valeur de la première garde au sol et un deuxième symbole 85 porteur de la valeur de la deuxième garde au sol affichées sur un horizon artificiel 75. Par exemple, le premier symbole et le deuxième symbole présentent la forme d'un segment ou encore d'une barre selon l'illustration de la figure 7.

Ainsi, le premier symbole 81 peut s'étendre selon un sens 150 à partir d'un segment d'horizon 76 représentant l'horizon sur l'horizon artificiel 75 jusqu'à une première extrémité 83 sur une première longueur 84 fonction de la valeur de la première garde au sol. De même le deuxième symbole 85 s'étend selon ce même sens 150, par exemple parallèlement au premier symbole 81, à partir du segment d'horizon 76 jusqu'à une deuxième extrémité 87 sur une deuxième longueur 88 fonction de la valeur de la deuxième garde au sol.

A l'instar du symbole central, le premier symbole 81 peut présenter un fond 811 variant en fonction de la valeur de la première garde au sol et le deuxième symbole 85 peut présenter un fond 850 variant en fonction de la valeur de la deuxième garde au sol.

Eventuellement, un segment de sol 89 est généré et affiché pour présenter schématiquement le sol à un pilote. Ce segment de sol 89 relie la première extrémité 83 à la deuxième extrémité 87

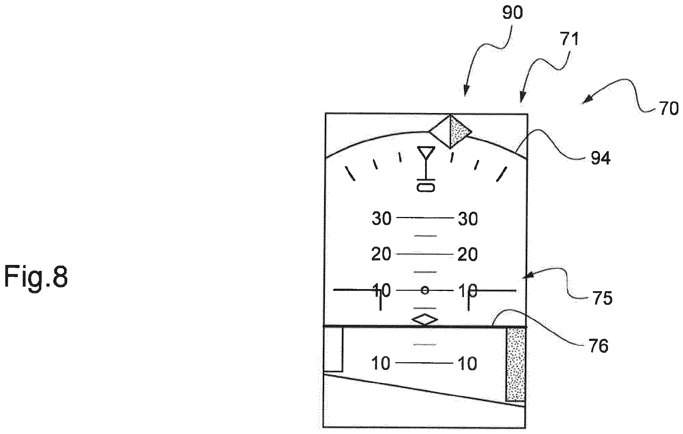

Selon la variante de la figure 8, le symbole central 90 et son segment de référence 94 ainsi que le premier symbole 81, le deuxième symbole 85 voire le segment de sol 89 sont générés et affichés.

## Revendications

1. Procédé d'assistance au pilotage d'un aéronef (1) ayant un fuselage (2) qui s'étend longitudinalement d'un nez (3) vers une extrémité arrière (4), ledit aéronef (1) ayant un premier arrangement latéral (10) et un deuxième arrangement latéral (20) disposés latéralement de part et d'autre du fuselage (2) et participant chacun au déplacement de l'aéronef (1),
**caractérisé en ce que** durant une phase d'assistance, ledit procédé comporte les étapes suivantes :
- mesure d'une valeur d'une première garde au sol du premier arrangement latéral (10) et d'une valeur d'une deuxième garde au sol du deuxième arrangement latéral (20),
- affichage sur un écran d'au moins un symbole (80) qui varie en fonction de la variation de ladite valeur de la première garde au sol et/ou de ladite valeur de la deuxième garde au sol.

2. Procédé selon la revendication 1,
**caractérisé en ce que** pour mesurer la valeur de la première garde au sol et la valeur de la deuxième garde au sol, ledit procédé comporte les étapes suivantes :
- acquisition d'au moins un premier signal de mesure avec un premier senseur (30) porteur d'une première information image de la valeur de la première garde au sol, et acquisition d'au moins un deuxième signal de mesure avec un deuxième senseur (40) porteur d'une deuxième information image de la valeur de la deuxième garde au sol,
- détermination de la valeur de la première garde au sol en traitant ledit au moins un premier signal de mesure et détermination de la valeur de la deuxième garde au sol en traitant ledit au moins un deuxième signal de mesure.

3. Procédé selon la revendication 1,
**caractérisé en ce que** pour mesurer la valeur de la première garde au sol et la valeur de la deuxième garde au sol, ledit procédé comporte les étapes suivantes :
- acquisition d'une pluralité de premiers signaux de mesure avec une pluralité de premiers senseurs (30) de la première garde au sol, acquisition d'une pluralité de deuxièmes signaux de mesure avec une pluralité de deuxièmes senseurs (40) de la deuxième garde au sol,
- conditionnement desdits premiers signaux de mesure et desdits deuxièmes signaux de mesure,
- consolidation desdits premiers signaux de mesure et desdits deuxièmes signaux de mesure suite au dit conditionnement via une méthode de vote pour l'obtention respectivement de la valeur de la première garde au sol et de la valeur de la deuxième garde au sol.

4. Procédé selon l'une quelconque des revendications 1 à 3,
**caractérisé en ce que** ledit aéronef comprend une pluralité de premiers senseurs (30) contenant au moins deux premiers senseurs dissimilaires et/ou disposés en des zones différentes du premier arrangement latéral, ledit aéronef comprenant une pluralité de deuxièmes senseurs (40) contenant au moins deux deuxièmes senseurs dissimilaires et/ou disposés en des zones différentes du deuxième arrangement latéral.

5. Procédé selon l'une quelconque des revendications 1 à 4,
**caractérisé en ce que** ledit affichage dudit au moins un symbole (80) est conditionné à la détection d'au moins un des deux évènements suivants :
- détection qu'un train d'atterrissage (7) rétractable de l'aéronef (1) est déployé,
- détection que la valeur de la première garde au sol est inférieure à une hauteur seuil ou que la deuxième garde est inférieure à la hauteur seuil.

6. Procédé selon l'une quelconque des revendications 1 à 4,
**caractérisé en ce que** ledit affichage dudit au moins un symbole (80) est conditionné à la détection simulltanée des deux évènements suivants :
- détection qu'un train d'atterrissage (7) rétractable de l'aéronef (1) est déployé,
- détection que la valeur de la première garde au sol est inférieure à une hauteur seuil ou que la deuxième garde est inférieure à la hauteur seuil.

7. Procédé selon l'une quelconque des revendications 1 à 6,
**caractérisé en ce que** ledit procédé comporte une étape de détermination d'une consigne de roulis à respecter, ledit au moins un symbole comprenant un symbole central (90) mobile le long d'un segment de référence (94), le positionnement dudit symbole central (90) sur le segment de référence (94) étant fonction de la consigne de roulis.

8. Procédé selon la revendication 7,
**caractérisé en ce que** ledit symbole central (90) comporte une première portion (91) et une deuxième portion (93) représentant respectivement la première garde au sol et la deuxième garde au sol, un fond (910) de la première portion (91) et un fond (930) de la deuxième portion (93) variant en fonction respectivement de la valeur de la première garde au sol et de la valeur de la deuxième garde au sol.

9. Procédé selon l'une quelconque des revendications 1 à 8, **caractérisé en ce que** ledit au moins un symbole comporte un premier symbole (81) et un deuxième symbole (85), le premier symbole (81) s'étendant selon un sens (150) à partir d'un segment d'horizon (76) représentant l'horizon d'un horizon artificiel (75) jusqu'à une première extrémité (83) sur une première longueur (84) fonction de la valeur de la première garde au sol, le deuxième symbole (85) s'étendant selon ledit sens (150) à partir du segment d'horizon (76) jusqu'à une deuxième extrémité (87) sur une deuxième longueur (88) fonction de la valeur de la deuxième garde au sol.

10. Procédé selon la revendication 9,
**caractérisé en ce que** ledit premier symbole (81) présente un fond (811) variant en fonction de la valeur de la première garde au sol et le deuxième symbole (85) présente un fond (850) variant en fonction de la valeur de la deuxième garde au sol.

11. Procédé selon l'une quelconque des revendications 9 à 10,
**caractérisé en ce que** ledit procédé comporte une étape d'affichage d'un segment de sol (89) reliant la première extrémité (83) à la deuxième extrémité (87).

12. Procédé selon l'une quelconque des revendications 1 à 11,
**caractérisé en ce que**, ledit aéronef comprenant au moins un train d'atterrissage pouvant être compressé afin d'être dans un état compressé ou un état non compressé, ledit procédé comporte les étapes suivantes :
- détermination que ledit au moins un train d'atterrissage est dans ledit état compressé ou dans ledit état non compressé,
- attribution au dit au moins un symbole d'un aspect variant lorsque ledit au moins un train d'atterrissage passe dudit état compressé au dit état non compressé et inversement.

13. Aéronef (1) ayant un fuselage (2) qui s'étend longitudinalement (X) d'un nez (3) vers une extrémité arrière (4), ledit aéronef (1) ayant un premier arrangement latéral (10) et un deuxième arrangement latéral (20) disposés latéralement (Y) de part et d'autre du fuselage (2) et participant chacun au déplacement de l'aéronef (1),
**caractérisé en ce que** ledit aéronef (1) comporte au moins un premier senseur (30) émettant un premier signal relatif à la valeur d'une première garde au sol du premier arrangement latéral (10), ledit aéronef comportant au moins un deuxième senseur (40) émettant un deuxième signal relatif à la valeur d'une deuxième garde au sol du deuxième arrangement latéral, ledit aéronef (1) comportant un écran (71) et un calculateur (60), ledit calculateur (60) étant relié à chaque premier senseur (30) ainsi qu'à chaque deuxième senseur (40) et à l'écran (71) et étant configuré pour appliquer le procédé selon l'une quelconque des revendications 1 à 12 en mesurant ladite valeur de la première garde au sol et la valeur de la deuxième garde au sol, ledit calculateur (60) transmettant un signal de commande à l'écran (71) pour afficher ledit au moins un symbole.

14. Aéronef selon la revendication 13,
**caractérisé en ce que** ledit aéronef (1) comporte au moins deux dits premiers senseurs (30) dissimilaires et/ou disposés en des zones différentes du premier arrangement latéral (10), ledit aéronef (1) comportant au moins deux dits deuxièmes senseurs (40) dissimilaires et/ou disposés en des zones différentes du deuxième arrangement latéral (20).

15. Aéronef selon l'une quelconque des revendications 13 à 14,
**caractérisé en ce qu'**au moins un premier senseur ou au moins un deuxième senseur comporte un LIDAR ou un radioaltimètre.

16. Aéronef selon l'une quelconque des revendications 13 à 15,
**caractérisé en ce que** ledit aéronef (1) comporte un train d'atterrissage (7) rétractable.

17. Aéronef selon l'une quelconque des revendications 13 à 16,
**caractérisé en ce que** le premier arrangement latéral (10) comprend une première voilure (11) fixe portant une première hélice (17) et le deuxième arrangement latéral (20) comprenant une deuxième voilure (21) fixe portant une deuxième hélice (27).

## Patentansprüche

1. Verfahren zur Unterstützung der Steuerung eines Luftfahrzeugs (1) mit einem Rumpf (2), der sich in Längsrichtung von einer Nase (3) zu einem hinteren Ende (4) erstreckt, wobei das Luftfahrzeug (1) eine erste Seitenanordnung (10) und eine zweite Seitenanordnung (20) aufweist, die seitlich auf beiden Seiten des Rumpfes (2) angeordnet sind und jeweils an der Fortbewegung des Luftfahrzeugs (1) beteiligt sind,
**dadurch gekennzeichnet, dass** während einer Unterstützungsphase das Verfahren die folgenden Schritte umfasst:
- Messen eines Wertes einer ersten Bodenfreiheit der ersten Seitenanordnung (10) und eines Wertes einer zweiten Bodenfreiheit der zweiten Seitenanordnung (20),
- Anzeigen auf einem Anzeigeschirm von mindestens einem Symbol (80), das sich in Abhängigkeit von der Änderung des Wertes der ersten Bodenfreiheit und/oder des Wertes der zweiten Bodenfreiheit verändert.

2. Verfahren nach Anspruch 1,
**dadurch gekennzeichnet, dass** das Verfahren zum Messen des Wertes der ersten Bodenfreiheit und des Wertes der zweiten Bodenfreiheit die folgenden Schritte umfasst:
- Erfassen von mindestens einem ersten Messsignal mit einem ersten Sensor (30), das Träger einer ersten Bildinformation des Wertes der ersten Bodenfreiheit ist, und Erfassen mindestens eines zweiten Messsignals mit einem zweiten Sensor (40), das Träger einer zweiten Bildinformation des Wertes der zweiten Bodenfreiheit ist,
- Bestimmen des Wertes der ersten Bodenfreiheit durch Verarbeiten des mindestens einen ersten Messsignals und Bestimmen des Wertes der zweiten Bodenfreiheit durch Verarbeiten des mindestens einen zweiten Messsignals.

3. Verfahren nach Anspruch 1, **dadurch gekennzeichnet, dass** das Verfahren die folgenden Schritte zum Messen des Wertes der ersten Bodenfreiheit und des Wertes der zweiten Bodenfreiheit umfasst:
- Erfassen einer Mehrzahl von ersten Messsignalen mit einer Mehrzahl von ersten Sensoren (30) für die erste Bodenfreiheit, Erfassen einer Mehrzahl von zweiten Messsignalen mit einer Mehrzahl von zweiten Sensoren (40) für die zweite Bodenfreiheit,
- Konditionieren der ersten Messsignale und der zweiten Messsignale,
- Konsolidieren der ersten Messsignale und der zweiten Messsignale nach dem Konditionieren über ein Abstimmungsverfahren, um den Wert der ersten Bodenfreiheit und den Wert der zweiten Bodenfreiheit zu erhalten.

4. Verfahren nach einem der Ansprüche 1 bis 3, **dadurch gekennzeichnet, dass** das Luftfahrzeug eine Mehrzahl von ersten Sensoren (30) umfasst, die mindestens zwei erste Sensoren enthält, die ungleich sind und/oder in verschiedenen Bereichen der ersten Seitenanordnung angeordnet sind, und dass das Luftfahrzeug eine Mehrzahl von zweiten Sensoren (40) umfasst, die die mindestens zwei zweite Sensoren enthält, die ungleich sind und/oder in verschiedenen Bereichen der zweiten Seitenanordnung angeordnet sind.

5. Verfahren nach einem der Ansprüche 1 bis 4,
**dadurch gekennzeichnet, dass** das Anzeigen des mindestens einen Symbols (80) von der Erfassung mindestens eines der beiden folgenden Ereignisse abhängig ist:
- Erkennen, dass ein einziehbares Fahrwerk (7) des Luftfahrzeugs (1) ausgefahren ist,
- Erkennen, dass der Wert der ersten Bodenfreiheit kleiner als eine Schwellenhöhe ist oder dass die zweite Bodenfreiheit kleiner als die Schwellenhöhe ist.

6. Verfahren nach einem der Ansprüche 1 bis 4,
**dadurch gekennzeichnet, dass** das Anzeigen des mindestens einen Symbols (80) von der gleichzeitigen Erfassung der folgenden zwei Ereignisse abhängig ist:
- Erkennen, dass ein einziehbares Fahrwerk (7) des Luftfahrzeugs (1) ausgefahren ist,
- Erkennen, dass der Wert der ersten Bodenfreiheit kleiner als eine Schwellenhöhe ist oder dass die zweite Bodenfreiheit kleiner als die Schwellenhöhe ist.

7. Verfahren nach einem der Ansprüche 1 bis 6,
**dadurch gekennzeichnet, dass** das Verfahren einen Schritt des Bestimmens einer einzuhaltenden Rollvorgabe umfasst, wobei das mindestens eine Symbol ein zentrales Symbol (90) umfasst, das entlang eines Referenzsegments (94) beweglich ist, und die Positionierung des Symbols (90) auf dem Referenzsegment (94) eine Funktion der Rollvorgabe ist.

8. Verfahren nach Anspruch 7,
**dadurch gekennzeichnet, dass** das zentrale Symbol (90) einen ersten Abschnitt (91) und einen zweiten Abschnitt (93) umfasst, die die erste Bodenfreiheit bzw. die zweite Bodenfreiheit darstellen, wobei ein Hintergrund (910) des ersten Abschnitts (91) und ein Hintergrund (930) des zweiten Abschnitts (93) als Funktion des Wertes der ersten Bodenfreiheit bzw. der zweiten Bodenfreiheit variieren.

9. Verfahren nach einem der Ansprüche 1 bis 8,
**dadurch gekennzeichnet, dass** das mindestens eine Symbol ein erstes Symbol (81) und ein zweites Symbol (85) umfasst, wobei sich das erste Symbol (81) in einer Richtung (150) von einem Horizontsegment (76), das den Horizont eines künstlichen Horizonts (75) darstellt, bis zu einem ersten Ende (83) über eine erste Länge (84) erstreckt, die von dem Wert der ersten Bodenfreiheit abhängt, und das zweite Symbol (85) sich in dieser Richtung (150) von dem Horizontsegment (76) bis zu einem zweiten Ende (87) über eine zweite Länge (88) erstreckt, die von dem Wert der zweiten Bodenfreiheit abhängt.

10. Verfahren nach Anspruch 9,
**dadurch gekennzeichnet, dass** das erste Symbol (81) einen Hintergrund (811) aufweist, der in Abhängigkeit vom Wert der ersten Bodenfreiheit variiert, und das zweite Symbol (85) einen Hintergrund (850) aufweist, der in Abhängigkeit vom Wert der zweiten Bodenfreiheit variiert.

11. Verfahren nach einem der Ansprüche 9 bis 10,
**dadurch gekennzeichnet, dass** das Verfahren einen Schritt des Anzeigens eines Bodensegments (89) umfasst, das das erste Ende (83) mit dem zweiten Ende (87) verbindet.

12. Verfahren nach einem der Ansprüche 1 bis 11,
**dadurch gekennzeichnet, dass** das Luftfahrzeug mindestens ein Fahrwerk umfasst, das stauchbar ist, um einen gestauchten Zustand oder einen nicht gestauchten Zustand einzunehmen, und das Verfahren die folgenden Schritte umfasst:
- Bestimmen, dass sich das mindestens eine Fahrwerk in dem gestauchten Zustand oder in dem genannten nicht gestauchten Zustand befindet,
- Zuweisen eines Erscheinungsbilds zu dem mindestens einen Symbol, das sich ändert, wenn das mindestens eine Fahrwerk von dem gestauchten Zustand in den nicht gestauchten Zustand übergeht und umgekehrt.

13. Luftfahrzeug (1) mit einem Rumpf (2), der sich in Längsrichtung (X) von einer Nase (3) zu einem hinteren Ende (4) erstreckt, wobei das Luftfahrzeug (1) eine erste Seitenanordnung (10) und eine zweite Seitenanordnung (20) aufweist, die seitlich (Y) auf beiden Seiten des Rumpfes (2) angeordnet sind und jeweils an der Fortbewegung des Luftfahrzeugs (1) beteiligt sind,
**dadurch gekennzeichnet, dass** das Luftfahrzeug (1) mindestens einen ersten Sensor (30) umfasst, der ein erstes Signal in Bezug auf den Wert einer ersten Bodenfreiheit des ersten Seitenanordnung (10) ausgibt, dass das Luftfahrzeug mindestens einen zweiten Sensor (40) umfasst, der ein zweites Signal in Bezug auf den Wert einer zweiten Bodenfreiheit der zweiten Anordnung (40) ausgibt, und dass das Luftfahrzeug (1) einen Anzeigeschirm (71) und einen Rechner (60) umfasst, wobei der Rechner (60) mit jedem ersten Sensor (30) sowie mit jedem zweiten Sensor (40) und mit dem Anzeigeschirm F(71) verbunden ist und konfiguriert ist, um das Verfahren nach einem der Ansprüche 1 bis 12 durch Messen des Wertes der ersten Bodenfreiheit und des Wertes der zweiten Bodenfreiheit auszuführen, wobei der Rechner (60) ein Steuersignal an den Anzeigeschirm (71) überträgt, um das mindestens eine Symbol anzuzeigen.

14. Luftfahrzeug nach Anspruch 13,
**dadurch gekennzeichnet, dass** das Luftfahrzeug (1) mindestens zwei der ersten Sensoren (30) umfasst, die ungleich und/oder in unterschiedlichen Bereichen der ersten Anordnung (10) angeordnet sind, und dass das Luftfahrzeug (1) mindestens zwei der zweiten Sensoren (40) umfasst, die ungleich und/oder in verschiedenen Bereichen der zweiten Seitenanordnung (20) angeordnet sind.

15. Luftfahrzeug nach einem der Ansprüche 13 bis 14,
**dadurch gekennzeichnet, dass** mindestens ein erster Sensor oder mindestens ein zweiter Sensor ein LIDAR oder einen Funkhöhenmesser umfasst.

16. Luftfahrzeug nach einem der Ansprüche 13 bis 15,
**dadurch gekennzeichnet, dass** das Luftfahrzeug (1) ein einziehbares Fahrwerk (7) aufweist.

17. Luftfahrzeug nach einem der Ansprüche 13 bis 16,
**dadurch gekennzeichnet, dass** die erste Seitenanordnung (10) eine erste feste Tragfläche (11) umfasst, die einen ersten Propeller (17) trägt, und die zweite Seitenanordnung (20) eine zweite feste Tragfläche (21) umfasst, die einen zweiten Propeller (27) trägt.

## Claims

1. Method for assisting with flying an aircraft (1) having
a fuselage (2) which extends longitudinally from a nose (3) towards a rear end (4), said aircraft (1) having a first lateral arrangement (10) and a second lateral arrangement (20) arranged laterally on either side of the fuselage (2) and each involved in the movement of the aircraft (1), **characterized in that** during an assistance phase, said method comprises the following steps:
- measuring a value for a first ground clearance of the first lateral arrangement (10) and a value for a second ground clearance of the second lateral arrangement (20),
- displaying at least one symbol (80) on a screen which varies as a function of the variation of said value for the first ground clearance and/or said value for the second ground clearance.

2. Method according to Claim 1,
**characterized in that** in order to measure the value for the first ground clearance and the value for the second ground clearance, said method comprises the following steps:
- acquiring at least one first measurement signal with a first sensor (30) bearing a first piece of image information about the value for the first ground clearance, and acquiring at least one second measurement signal with a second sensor (40) bearing a second piece of image information about the value for the second ground clearance,
- determining the value for the first ground clearance by processing said at least one first measurement signal and determining the value for the second ground clearance by processing said at least one second measurement signal.

3. Method according to Claim 1,
**characterized in that** in order to measure the value for the first ground clearance and the value for the second ground clearance, said method comprises the following steps:
- acquiring a plurality of first measurement signals with a plurality of first sensors (30) of the first ground clearance, and acquiring a plurality of second measurement signals with a plurality of second sensors (40) of the second ground clearance,
- conditioning said first measurement signals and said second measurement signals,
- consolidating said first measurement signals and said second measurement signals following said conditioning via a voting method in order to respectively obtain the value for the first ground clearance and the value for the second ground clearance.

4. Method according to any one of Claims 1 to 3, **characterized in that** said aircraft comprises a plurality of first sensors (30) having at least two first sensors that are dissimilar and/or arranged in different zones of the first lateral arrangement, said aircraft comprising a plurality of second sensors (40) having at least two second sensors that are dissimilar and/or arranged in different zones of the second lateral arrangement.

5. Method according to any one of Claims 1 to 4,
**characterized in that** said display of said at least one symbol (80) is conditional on the detection of at least one of the two following events:
- detection that a retractable landing gear (7) of the aircraft (1) is deployed,
- detection that the value for the first ground clearance is lower than a threshold height or that the second clearance is lower than the threshold height.

6. Method according to any one of Claims 1 to 4,
**characterized in that** said display of said at least one symbol (80) is conditional on the simultaneous detection of the two following events:
- detection that a retractable landing gear (7) of the aircraft (1) is deployed,
- detection that the value for the first ground clearance is lower than a threshold height or that the second clearance is lower than the threshold height.

7. Method according to any one of Claims 1 to 6,
**characterized in that** said method comprises a step of determining a roll set point to be complied with, said at least one symbol comprising a central symbol (90) that can move along a reference segment (94), the positioning of said central symbol (90) on the reference segment (94) being a function of the set point roll.

8. Method according to Claim 7,
**characterized in that** said central symbol (90) comprises a first section (91) and a second section (93) respectively representing the first ground clearance and the second ground clearance, a background (910) of the first section (91) and a background (930) of the second section (93) varying as a function of the value for the first ground clearance and the value for the second ground clearance respectively.

9. Method according to any one of Claims 1 to 8,
**characterized in that** said at least one symbol comprises a first symbol (81) and a second symbol (85), the first symbol (81) extending in a direction (150) from a segment of horizon (76) representing the horizon of an artificial horizon (75) to a first end (83) over a first length (84) which is a function of the value for the first ground clearance, the second symbol (85) extending in said direction (150) from the segment of horizon (76) to a second end (87) over a second length (88) which is a function of the value for the second ground clearance.

10. Method according to Claim 9,
**characterized in that** said first symbol (81) has a background (811) varying as a function of the value for the first ground clearance and the second symbol (85) has a background (850) varying as a function of the value for the second ground clearance.

11. Method according to any one of Claims 9 to 10,
**characterized in that** said method comprises a step of displaying a segment of ground (89) connecting the first end (83) to the second end (87).

12. Method according to any one of Claims 1 to 11,
**characterized in that**, said aircraft comprising at least one landing gear that can be compressed in order to be in a compressed state or an uncompressed state, said process comprises the following steps:
- determining that said at least one landing gear is in said compressed state or said uncompressed state,
- assigning to said at least one symbol a varying aspect when said at least one landing gear changes from said compressed state to said uncompressed state and vice versa.

13. Aircraft (1) having a fuselage (2) which extends longitudinally (X) from a nose (3) towards a rear end (4), said aircraft (1) having a first lateral arrangement (10) and a second lateral arrangement (20) arranged laterally (Y) on either side of the fuselage (2) and each involved in the movement of the aircraft (1),
**characterized in that** said aircraft (1) comprises at least one first sensor (30) generating a first signal relative to the value for a first ground clearance of the first lateral arrangement (10), said aircraft comprising at least one second sensor (40) generating a second signal relative to the value for a second ground clearance of the second lateral arrangement, said aircraft (1) comprising a screen (71) and a computer (60), said computer (60) being connected to each first sensor (30) and to each second sensor (40) and to the screen (71) and being designed to implement the method according to any one of Claims 1 to 12 by measuring said value for the first ground clearance and the value for the second ground clearance, said computer (60) transmitting a control signal to the screen (71) in order to display said at least one symbol.

14. Aircraft according to Claim 13,
**characterized in that** said aircraft (1) comprises at least two said first sensors (30) that are dissimilar and/or arranged in different zones of the first lateral arrangement (10), said aircraft (1) comprising at least two said second sensors (40) that are dissimilar and/or arranged in different zones of the second lateral arrangement (20).

15. Aircraft according to either one of Claims 13 or 14,
**characterized in that** at least one first sensor or at least one second sensor comprises a LIDAR system or a radar altimeter.

16. Aircraft according to any one of Claims 13 to 15,
**characterized in that** said aircraft (1) comprises a retractable landing gear (7).

17. Aircraft according to either one of Claims 13 or 16,
**characterized in that** the first lateral arrangement (10) comprises a first fixed wing (11) supporting a first propeller (17) and the second lateral arrangement (20) comprising a second fixed wing (21) supporting a second propeller (27).
